Europäisches Patentamt

**European Patent Office**

Office européen des brevets

(11) Numéro de publication : **0 029 372**
**B1**

(12) **FASCICULE DE BREVET EUROPÉEN**

(45) Date de publication du fascicule du brevet :
23.05.84

(51) Int. Cl.³ : **G 21 C 15/18**

(21) Numéro de dépôt : **80401483.5**

(22) Date de dépôt : **17.10.80**

(54) **Dispositif de refroidissement de secours du coeur d'un réacteur nucléaire à eau pressurisée.**

(30) Priorité : **16.11.79 FR 7928316**

(43) Date de publication de la demande :
**27.05.81 Bulletin 81/21**

(45) Mention de la délivrance du brevet :
**23.05.84 Bulletin 84/21**

(84) Etats contractants désignés :
**BE CH DE GB IT LI NL SE**

(56) Documents cités :
**DE-A- 1 564 546**
**DE-A- 2 719 897**
**FR-A- 2 298 163**
**GB-A-   887 252**
**US-A- 3 506 539**
**US-A- 4 051 892**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Fajeau, Maurice**
**Chemin du Saint Sépulcre**
**F-84120 Pertuis (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

L'invention concerne un dispositif de refroidissement de secours du cœur d'un réacteur nucléaire à eau pressurisée.

Les dispositifs de refroidissement connus de ce type de réacteurs sont généralement constitués par des accumulateurs remplis d'eau sous pression, qui communiquent avec le circuit de refroidissement primaire du réacteur par l'intermédiaire de clapets d'isolement sensibles à une valeur inférieure déterminée de la pression régnant dans ce circuit primaire. L'eau remplissant les accumulateurs est pressurisée par de l'azote.

Ces dispositifs connus présentent différents inconvénients. Ainsi, l'injection d'eau en provenance des accumulateurs de refroidissement de secours du cœur ne se produit pas forcément au moment le plus favorable. En effet, lorsque la baisse de pression dans le circuit primaire résulte d'une rupture de tuyauterie relativement peu importante, il peut y avoir vidange du circuit primaire sans diminution suffisante de la pression primaire pour déclencher la vidange des accumulateurs. Le circuit primaire peut alors être rempli par les pompes « haute pression » ; mais celles-ci constituent des systèmes actifs sur lesquels les opérateurs peuvent intervenir à tort. D'autre part, la vidange des accumulateurs est liée à une valeur de la pression du circuit primaire et non à un niveau cuve qui est la grandeur physique la plus significative du besoin de remplissage en eau du circuit primaire.

Par ailleurs, l'injection d'eau dans le circuit primaire se termine généralement par une injection de l'azote servant à pressuriser l'eau dans les accumulateurs. Ce gaz peut alors être piégé soit dans les tubes en U renversés des générateurs de vapeur, soit dans les parties hautes des branches chauves du circuit primaire lorsque les générateurs de vapeur sont du type dit « à simple passe », dans lesquels le fluide primaire pénètre dans le générateur à son extrémité supérieure et en ressort à son extrémité inférieure. Il en résulte dans les deux cas une perte de l'efficacité de la source froide que constituent les générateurs de vapeur.

On connaît aussi du document GB-A-887 252 un réacteur à eau pressurisée dans lequel une augmentation anormale du niveau de l'eau dans le pressuriseur sert à déclencher une circulation naturelle de l'eau du circuit primaire dans un échangeur de refroidissement de secours.

L'invention a pour objet la réalisation d'un dispositif de refroidissement de secours ne présentant pas les inconvénients des dispositifs connus et permettant notamment d'injecter de l'eau froide dans le cœur au moment le plus opportun.

A cet effet, et conformément à l'invention, il est proposé un dispositif de refroidissement de secours du cœur d'un réacteur nucléaire à eau pressurisée, dans lequel le cœur du réacteur est disposé à l'intérieur d'une cuve étanche communiquant par les branches chaudes et froides d'un circuit de refroidissement primaire avec au moins un générateur de vapeur, ce dispositif étant caractérisé en ce qu'il comprend au moins un réservoir rempli d'eau et dont le fond est disposé au-dessus des tubulures par lesquelles les branches chaudes et froides du circuit primaire pénètrent dans la cuve, ce réservoir communiquant directement et en permanence avec la cuve du réacteur par une première tuyauterie débouchant dans la cuve entre lesdites tubulures et le niveau haut du cœur, et par une seconde tuyauterie débouchant dans la cuve en dessous de la première tuyauterie.

Grâce au dispositif selon l'invention, l'injection d'eau de secours n'est plus commandée par des clapets d'isolement sensibles à une pression inférieure déterminée dans le circuit primaire, mais par l'abaissement du niveau du fluide primaire dans la cuve du réacteur. Le niveau de déclenchement est déterminé par la première tuyauterie reliant le réservoir à la cuve du réacteur, la vapeur formée en cas de baisse de niveau pénétrant dans cette tuyauterie pour amorcer la vidange de la réserve.

Conformément à une première variante de l'invention, les deux tuyauteries pénètrent dans la cuve sensiblement au même niveau. De préférence, les deux tuyauteries comportent alors des parties horizontales non ou peu calorifugées, de longueur suffisante pour éviter tout amorçage de circulation par convection naturelle entre cuve et réservoir, en fonctionnement normal. En effet, aucune des tuyauteries de liaison cuve-réservoir n'est équipée de vanne.

Conformément à une seconde variante de l'invention, lorsqu'on désire créer une circulation par convection naturelle entre la cuve et le réservoir, les deux tuyauteries pénètrent dans la cuve à des niveaux différents.

Selon une autre caractéristique de l'invention, la seconde tuyauterie peut comprendre à l'intérieur de la cuve un coude dirigé vers le bas et plongeant dans un entonnoir prolongé par un tuyau permettant à l'eau d'injection, d'une part de se mélanger en partie à l'eau chaude de la cuve, et d'autre part, d'arriver directement au fond de la cuve.

Conformément à une autre caractéristique de l'invention, le dispositif comprend de plus un circuit de réfrigération comportant un échangeur de chaleur disposé à l'intérieur du réservoir. Ce circuit de réfrigération peut être le circuit d'injection de secours basse pression qui est utilisé pour assurer la chute de la pression du circuit primaire en cas de brèche sur celui-ci. Dès que la pression primaire a suffisamment baissé, ce circuit de réfrigération assure le remplissage du circuit primaire par l'intermédiaire d'un clapet trois voies.

Le dispositif selon l'invention peut également comprendre deux tuyauteries de refroidissement du réacteur à l'arrêt mettant respectivement en communication la partie haute du réservoir avec au moins une branche chaude, par l'intermédiaire d'au moins une électrovanne et la partie basse du réservoir avec au moins une branche froide, par l'intermédiaire d'une électrovanne et d'une pompe de circulation. Grâce à cette caractéristique, le dispositif selon l'invention peut également être utilisé comme dispositif haute pression de refroidissement du réacteur à l'arrêt. Pour cette dernière fonction, la réserve d'eau du circuit de refroidissement doit elle-même être refroidie.

Le dispositif selon l'invention peut aussi comprendre un circuit de réchauffage de l'eau contenue dans le réservoir haute pression, ce circuit comprenant un serpentin disposé dans le réservoir et dont les extrémités communiquent respectivement avec au moins une branche chaude et avec au moins une branche froide par l'intermédiaire d'au moins une électrovanne.

Selon encore une autre caractéristique de l'invention, l'eau contenue dans les réservoirs peut être de l'eau boriquée dont la concentration en acide borique est contrôlée et ajustée au moyen d'un circuit de liaison par lequel les réservoirs communiquent avec un circuit de contrôle volumétrique et chimique externe.

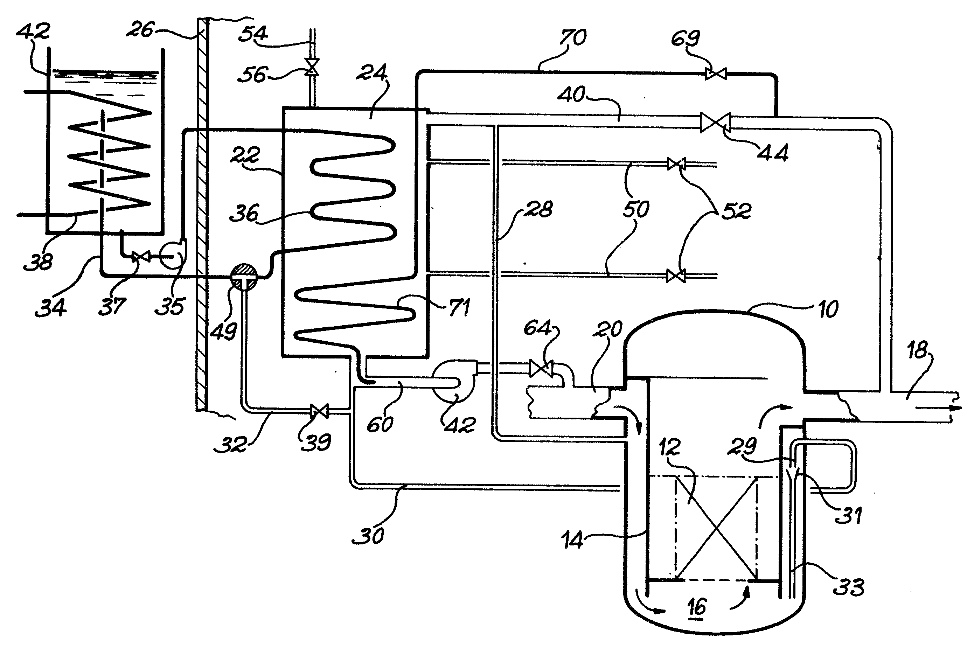

On décrira maintenant, à titre d'exemple non limitatif, un mode de réalisation particulier de l'invention en se référant au dessin annexé dans lequel la figure unique représente de façon schématique la cuve d'un réacteur nucléaire à eau pressurisée, ce réacteur étant équipé d'un dispositif de refroidissement de secours réalisé conformément aux enseignements de la présente invention.

On a représenté très schématiquement sur la figure, la cuve 10 d'un réacteur nucléaire à eau pressurisée dont le cœur 12, disposé à l'intérieur de la cuve 10, est supporté par une virole 14. Le cœur du réacteur est parcouru par un fluide de refroidissement 16 qui circule dans le sens des flèches. Le fluide de refroidissement 16, constitué généralement par de l'eau sous pression dans ce type de réacteur, assure l'extraction des calories dégagées par la fission nucléaire dans le cœur du réacteur et le transfert de ces calories jusqu'à des générateurs de vapeur (non représentés) par un circuit de refroidissement primaire. Le circuit primaire est constitué par plusieurs boucles dont seules une branche chaude 18 et une branche froide 20 sont représentées partiellement sur la figure.

Conformément à l'invention, au moins un réservoir 22, rempli d'eau boriquée 24, est disposé à l'intérieur de l'enceinte de confinement 26 du réacteur. En pratique, pour des raisons de sûreté, on prévoira au moins deux réservoirs du type du réservoir 22. Chaque réservoir 22 est disposé à un niveau tel que le fond de ce réservoir est situé au-dessus des branches chaudes 18 et froides 20 du circuit primaire. Une première tuyauterie 28 relie en permanence le haut du réservoir 22 à la cuve 10 du réacteur entre les branches chaudes 18 et froides 20 du circuit primaire et le niveau haut du cœur 12 du réacteur. Une seconde tuyauterie 30 relie le fond du réservoir 22 à la cuve 10, dans laquelle elle arrive de préférence au même niveau que la tuyauterie 28, afin d'empêcher la circulation naturelle de l'eau entre la cuve 10 et le réservoir 22. Dans une variante non représentée, les tuyauteries 28 et 30 peuvent arriver dans la cuve 10 à deux niveaux différents lorsqu'il est souhaitable de faire circuler l'eau boriquée par convection naturelle entre la cuve et le réservoir.

Comme l'illustre la figure, la tuyauterie 30 se prolonge vers le bas à l'intérieur de la cuve 10 par un coude 29 dont l'extrémité plonge dans un entonnoir 31 constituant l'extrémité supérieure d'un tuyau 33 débouchant à proximité du fond de la cuve. L'extrémité du coude 29 se trouve à un niveau voisin du niveau haut du cœur 12, de telle sorte qu'en cas de baisse de niveau dans la cuve 10, la vapeur formée pénétrera en premier lieu dans la tuyauterie 28 pour amorcer la vidange de la réserve 22. L'espace laissé libre entre l'extrémité du coude 29 et l'entonnoir 31 permet à l'eau d'injection provenant de la réserve 22 de se mélanger en partie à l'eau chaude de la cuve, le reste de l'eau d'injection arrivant directement au fond de la cuve par le tuyau 33.

Comme l'illustre la figure, les tuyauteries 28 et 30 comprennent chacune une partie sensiblement horizontale faisant obstacle à la convection naturelle de l'eau boriquée 24 entre la cuve du réacteur et le réservoir. En effet, étant donné qu'aucune des tuyauteries 28 et 30 n'est équipée de vanne, le réservoir 22 communique directement et en permanence par ces deux tuyauteries avec la cuve 10 du réacteur.

Dans le mode de réalisation représenté, le refroidissement de l'eau 24 contenue dans le réservoir 22 est réalisé au moyen d'un circuit de réfrigération 34 comportant un échangeur de chaleur 36, en forme de serpentin, disposé à l'intérieur du réservoir 22, une pompe de circulation 35 et une vanne 37. Le fluide réfrigérant circulant dans le circuit 34 provient d'un réservoir 42 et il est refroidi en permanence par exemple au moyen d'un second échangeur 38 disposé à l'intérieur du réservoir 42.

Le circuit de réfrigération 34 est en communication avec le circuit primaire par l'intermédiaire d'un circuit d'injection de secours 32 contrôlé par une vanne 39 qui s'ouvre lorsqu'il reçoit un signal d'injection de secours et par un clapet trois voies 49 qui permet dès que la pression primaire a suffisamment chuté, le remplissage du circuit primaire en bloquant la recirculation d'eau d'injection de secours vers le réservoir 42.

De préférence, le dispositif de refroidissement de secours selon l'invention comprend également des tuyauteries 40 et 60 de refroidissement du réacteur à l'arrêt mettant respectivement en communication la partie haute et le fond du réservoir 22 avec une ou plusieurs des branches chaudes 18 et froides 20 du circuit primaire. Ces tuyauteries 40 et 60 permettent, au moyen d'une pompe 42 et après ouverture d'électrovannes 44 et 64, d'évacuer la chaleur sensible du circuit primaire et la puissance résiduelle du cœur 12 du réacteur lors de l'arrêt à froid de ce dernier, quelles que soient la température et la pression de l'eau du circuit primaire.

Un circuit 70 de réchauffage de l'eau contenue dans le réservoir 22 communique avec la tuyauterie 40 en amont de l'électrovanne 44. Ce circuit 70 comporte une électrovanne 69 et un serpentin 71 situé de préférence au fond du réservoir 22 et débouchant dans la tubulure de la tuyauterie 60. Les extrémités du serpentin 71 se trouvent ainsi raccordées indirectement par les tuyauteries 40 et 60 aux branches chaude 18 et froide 20 du circuit primaire, respectivement. Ce circuit est donc disposé de telle façon qu'il n'introduit aucun mouvement de l'eau du réservoir 22 vers le circuit primaire, permettant ainsi de garder constante la concentration en bore du réservoir.

Bien entendu, le réchauffage de l'eau contenue dans le réservoir 22 peut être effectué par tout autre moyen (électrique par exemple).

Dans le mode de réalisation représenté, la concentration en acide borique de l'eau 24 contenue dans le réservoir 22 est contrôlée et ajustée au moyen d'un circuit 50 comprenant deux électrovannes 52. Le circuit 50 relie le réservoir 22 à un circuit de contrôle volumétrique et chimique classique disposé de façon connue à l'extérieur de l'enceinte de confinement 26 du réacteur.

Enfin, un circuit de purge 54, contrôlé par une électrovanne 56, débouche dans la partie supérieure du réservoir 22.

Le fonctionnement du réacteur à eau pressurisée décrit partiellement en se référant à la figure unique est identique en régime normal au fonctionnement des réacteurs connus de ce type et ne sera pas décrit dans la présente demande.

Lors d'une décompression accidentelle du circuit primaire résultant d'une perte de fluide primaire par une brèche formée dans une tuyauterie, l'eau boriquée éventuellement froide contenue dans le réservoir 22 se déverse automatiquement par la tuyauterie 30 dans la cuve 10 du réacteur dès que le niveau de l'eau dans cette cuve descend en dessous de la pénétration de la tuyauterie 28. La mise en œuvre du dispositif selon l'invention est donc commandée automatiquement par la baisse du niveau de l'eau dans la cuve du réacteur sans qu'il soit nécessaire de mettre en œuvre une ou plusieurs électrovannes. En outre, cette mise en œuvre n'est pas liée à l'ouverture de clapets. Ainsi, le refroidissement du cœur 12 du réacteur est toujours réalisé dès que ce dernier risque de se trouver asséché, c'est-à-dire au moment le plus opportun, quelle que soit l'amplitude de la brèche formée dans le circuit primaire. Le dispositif selon l'invention est donc sensiblement plus efficace que les dispositifs de la technique antérieure dans lesquels la mise en œuvre est commandée par des clapets d'isolement sensibles à une pression donnée dans le circuit primaire.

Le dispositif décrit en se référant à la figure unique permet également d'assurer le refroidissement du réacteur à l'arrêt en ouvrant les électrovannes 44 et 64 et en faisant circuler le fluide primaire entre la cuve 10 et le réservoir 22 au moyen de la pompe 42 disposée dans la tuyauterie 60. Le refroidissement du fluide primaire est alors réalisé dans le réservoir 22 grâce au circuit de réfrigération 34 et en particulier à l'échangeur 36. La disposition décrite permet ainsi d'évacuer la chaleur sensible du circuit primaire et la puissance résiduelle du cœur 12 du réacteur lors de l'arrêt à froid de ce dernier, sans qu'il soit nécessaire d'attendre que la température et la pression de l'eau du circuit primaire diminuent sensiblement par rapport à leur valeur normale de fonctionnement.

Bien entendu, l'invention n'est pas limitée au mode de réalisation qui vient d'être décrit à titre d'exemple. En particulier, les tuyauteries 40 et 60 qui permettent comme on vient de le voir de refroidir le réacteur à l'arrêt peuvent éventuellement être supprimées, le dispositif réalisant alors uniquement le refroidissement de secours du cœur du réacteur en cas d'accident par perte de fluide primaire. Le circuit 50 qui permet de contrôler et d'ajuster la concentration en acide borique de l'eau 24 contenue dans le réservoir 22 peut aussi être supprimé ou remplacé par tout autre dispositif équivalent.

**Revendications**

1. Dispositif de refroidissement de secours du cœur d'un réacteur nucléaire à eau pressurisée, dans lequel le cœur (12) du réacteur est disposé à l'intérieur d'une cuve étanche (10) communiquant par les branches chaudes (18) et froides (20) d'un circuit de refroidissement primaire avec au moins un générateur de vapeur, caractérisé en ce qu'il comprend au moins un réservoir (22) rempli d'eau et dont le fond est disposé au-dessus des tubulures par lesquelles les branches chaudes (18) et froides (20) du circuit primaire pénètrent dans la cuve (10), ce réservoir communiquant directement et en permanence avec la cuve du réacteur par une première tuyauterie (28) débouchant dans la cuve entre lesdits tubulures et le niveau haut du cœur, et par une seconde tuyauterie (30) débouchant dans la cuve en dessous de la première tuyauterie.

2. Dispositif selon la revendication 1, caractérisé en ce que les deux tuyauteries (28, 30) pénètrent dans la cuve (10) sensiblement au même niveau.

3. Dispositif selon la revendication 2, caractérisé en ce que chacune des tuyauteries (28, 30) comprend une partie horizontale non ou peu calorifugée faisant obstacle à la convection naturelle de l'eau entre la cuve (10) du réacteur et le réservoir (22).

4. Dispositif selon la revendication 1, caractérisé en ce que les deux tuyauteries (28, 30) pénètrent dans la cuve à deux niveaux différents.

5. Dispositif selon l'une quelconque des revendications précédentes, caractérisé en ce que la seconde tuyauterie (30) comprend un coude (29) dirigé vers le bas de la cuve (10) et débouchant dans un entonnoir (31) constituant l'extrémité supérieure d'un tuyau (33) débouchant au fond de la cuve.

6. Dispositif selon l'une quelconque des revendications précédentes, caractérisé en ce qu'il comprend de plus un circuit de réfrigération (34) comportant un échangeur de chaleur (36) disposé à l'intérieur du réservoir (22).

7. Dispositif selon la revendication 6, caractérisé en ce que le circuit de réfrigération (34) comprend de plus un second échangeur de chaleur (38) disposé dans un réservoir de stockage (42) et un clapet trois voies (49) susceptible d'interrompre la recirculation d'eau dans le circuit de réfrigération (34) pour mettre en communication le réservoir de stockage (42) et la cuve (10) du réacteur, de telle sorte que le circuit de réfrigération (34) constitue un circuit d'injection de secours basse pression (32).

8. Dispositif selon l'une quelconque des revendications précédentes, caractérisé en ce qu'il comprend deux tuyauteries (40, 60) de refroidissement du réacteur à l'arrêt mettant respectivement en communication la partie haute du réservoir haute pression (22) avec au moins une branche chaude (18) par l'intermédiaire d'une électrovanne (44), et la partie basse du réservoir haute pression (22) avec au moins une branche froide (20) par l'intermédiaire d'une électrovanne (64) et d'une pompe de circulation (42).

9. Dispositif selon l'une quelconque des revendications précédentes, caractérisé en ce qu'il comprend de plus un circuit (70) de réchauffage de l'eau contenue dans le réservoir haute pression (22), ce circuit comprenant un serpentin (71) disposé dans le réservoir (22) et dont les extrémités communiquent respectivement avec au moins une branche chaude (18) et avec au moins une branche froide (20) par l'intermédiaire d'au moins une électrovanne (69).

10. Dispositif selon l'une quelconque des revendications précédentes, caractérisé en ce que l'eau contenue dans le réservoir (22) est de l'eau boriquée dont la concentration en acide borique est contrôlée et ajustée au moyen d'un circuit de liaison (50) par lequel le réservoir (22) communique avec un circuit de contrôle volumétrique et chimique externe.

**Claims**

1. Emergency cooling system for the core of a pressurized water nuclear reactor, in which the reactor core (12) is located in the interior of a sealed vessel (10) communicating with the hot leg (18) and the cold leg (20) of a primary cooling circuit with at least one steam generator, characterized in that it comprises at least one water-filled reservoir (22) whose bottom is located above the conduits by which the hot and cold legs (18, 20) of the primary circuit pass into the vessel (10), said reservoir communicating directly and permanently with the reactor vessel by means of a first pipe (28) opening into the vessel between said conduits and the top of the core, and by a second pipe (30) opening into the vessel below the first pipe.

2. System according to Claim 1, characterized in that the two pipes (28, 30) pass into the vessel (10) at substantially the same level.

3. System according to Claim 2, characterized in that each of the pipes (28, 30) comprises a horizontal portion that is not insulated or only partially insulated providing an obstacle to natural convection of water between the reactor vessel (10) and the reservoir (22).

4. System according to Claim 1, characterized in that the two pipes (28, 30) pass into the vessel at two different levels.

5. System according to any one of the preceding Claims, characterized in that the second pipe (30) comprises a cranked portion (29) directed towards the lower part of the vessel (10) and opening into a funnel that constitutes the upper end of a pipe opening at the bottom of the vessel.

6. System according to any one of the preceding Claims, characterized in that it additionally comprises a cooling circuit (34) including a heat exchanger (36) located in the interior of reservoir (22).

7. System according to Claim 6, characterized in that the cooling circuit (34) additionally comprises a second heat exchanger (38) located in a storage reservoir (42), and a three-way valve (49) adapted to interrupt circulation of water in the cooling circuit (34) and to put the storage reservoir (42) into communication with the reactor vessel (10), whereby the cooling circuit (34) consistitutes a low pressure emergency injection circuit.

8. System according to any one of the preceding Claims, characterized in that it comprises two cooling pipes (40, 60) for reactor shut-down, respectively providing communication between the upper part of the high-pressure reservoir (22) and at least one hot leg (18) by way of an electrovalve (44), and between the lower part of the high-pressure reservoir (22) and at least one cold leg (20) by way of an electrovalve (64) and a circulating pump (42).

9. System according to any one of the preceding Claims, characterized in that it additionally comprises at least one circuit (70) for reheating the water contained in the high pressure reservoir (22), said circuit comprising a coil (71) located in reservoir (22) and whose ends respectively communicate with at least one hot leg (18) and with at least one cold leg (20) by way of at least one electrovalve (69).

10. System according to any one of the preceding Claims, characterized in that the water contained in reservoir (22) is buffered with boric acid, the concentration of boric acid being controlled and adjusted by way of a linking circuit (50) by means of which the reservoir (22) communicates with an external chemical and volumetric control circuit.

## Ansprüche

1. Notkühlvorrichtung für den Kern eines Druckwasser-Kernreaktors, bei welchem der Reaktorkern (12) in einem dicht verschlossenen Behälter (10) angeordnet ist, welcher über einen heißen und einen kalten Zweig (18 bzw. 20) eines Primärkühlkreises mit wenigstens einem Dampferzeuger strömungsverbunden ist, gekennzeichnet durch wenigstens einen mit Wasser gefüllten Vorratsbehälter (22) dessen Boden oberhalb der Höhe liegt, in welcher die Rohrleitungen des heißen Zweigs (18) und des kalten Zweigs (20) des Primärkreises in den Behälter (10) einmünden, und welcher über eine erste Rohrleitung (28), welche in einer zwischen den genannten Rohrleitungen und dem oberen Teil des Reaktorkerns in den Behälter ausmündet sowie über eine zweite Rohrleitung (30), welche unterhalb der ersten Rohrleitung im Behälter ausmündet, direkt und dauernd mit dem Behälter (10) strömungsverbunden ist.

2. Vorrichtung nach Anspruch 1, dadurch gekennzeichnet, daß die beiden Rohrleitungen (28, 30) im wesentlichen in der gleichen Höhe in den Behälter (10) eintreten.

3. Vorrichtung nach Anspruch 2, dadurch gekennzeichnet, daß jede der Rohrleitungen (28, 30) einen nicht oder nur wenig wärmeisolierten, waagerechten Abschnitt aufweist, welcher ein Hindernis für die natürliche Konvektion des Wassers zwischen dem Behälter (10) des Reaktors und dem Vorratsbehälter (22) darstellt.

4. Vorrichtung nach Anspruch 1, dadurch gekennzeichnet, daß die beiden Rohrleitungen (28, 30) in verschiedener Höhe in den Behälter eintreten.

5. Vorrichtung nach einem der vorstehenden Ansprüche, dadurch gekennzeichnet, daß die zweite Rohrleitung (30) ein zum unteren Teil des Behälters (10) hin gekrümmtes Endstück (29) aufweist, welches in einem das obere Ende eines am Boden des Behälters ausmündenden Rohrs (33) darstellenden Trichter (31) ausmündet.

6. Vorrichtung nach einem der vorstehenden Ansprüche, dadurch gekennzeichnet, daß sie einen zusätzlichen Kühlkreis (34) aufweist, zu welchem ein im Inneren des Voratsbehälters (22) angeordneter Wärmetauscher (36) gehört.

7. Vorrichtung nach Anspruch 6, dadurch gekennzeichnet, daß der zusätzliche Kühlkreis (34) weiterhin einen in einem Vorratshaltungsbehälter (42) angeordneten zweiten Wärmetauscher (38) sowie ein Dreiwegeventil (49) aufweist, mittels dessen sich der Umlauf des Wassers im Kühlkreis unterbrechen und der Vorratshaltungsbehälter (42) mit dem Reaktorbehälter (10) in Strömungsverbindung versetzen läßt, so daß also der zusätzliche Kühlkreis (34) einen Niederdruck-Noteintragskreis (32) darstellt.

8. Vorrichtung nach einem der vorstehenden Ansprüche, dadurch gekennzeichnet, daß sie zwei Rohrleitungen (40, 60) für die Kühlung des Reaktors im abgeschalteten Zustand aufweist, welche das obere Teil des Vorratsbehälters (22) über ein Magnetventil (44) mit wenigstens einem heißen Zweig (18) bzw. das untere Teil des Vorratsbehälters (22) über ein Magnetventil (64) und eine Umwälzpumpe (42) mit wenigstens einem kalten Zweig (20) verbinden.

9. Vorrichtung nach einem der vorstehenden Ansprüche, dadurch gekennzeichnet, daß sie weiterhin einen Heizkreis (70) für das unter hohem Druck im Vorratsbehälter (22) enthaltene Wasser aufweist, zu welchem eine im Vorratsbehälter (22) angeordnete Heizschlange (71) gehört, deren Enden über wenigstens ein Magnetventil (69) mit wenigstens einem heißen Zweig (18) bzw. wenigstens einem kalten Zweig (20) strömungsverbunden sind.

10. Vorrichtung nach einem der vorstehenden Ansprüche, dadurch gekennzeichnet, daß das im Vorratsbehälter (22) enthaltene Wasser Borsäure enthält, wobei die Konzentration der Borsäure mittels eines Verbindungskreises (50) steuer- und einstellbar ist, über welchen der Vorratsbehälter mit einem äußeren volumetrischen und chemischen Steuerkreis verbunden ist.

0 029 372